# DEMANDE DE BREVET EUROPEEN

(11) **EP 3 660 726 A1**
(43) Date de publication de la demande: **03.06.2020**
(21) Numéro de dépôt: 19210795.1
(22) Date de dépôt: 21.11.2019
(51) Int. Cl.: G06F 40/35

(54) **PROCEDE DE DETERMINATION D'UN AGENT CONVERSATIONAL SUR UN TERMINAL**

(30) Priorité: 29.11.2018 FR 1872100
(71) Demandeur: ORANGE, 75015 Paris (FR)
(72) Inventeur: BRUN, Arnaud, 92326 CHÂTILLON CEDEX (FR); KIRSCHBAUM, Patrick, 92326 CHÂTILLON CEDEX (FR)
(74) Mandataire: Plasseraud IP

(57) **Abrégé**

La présente invention concerne un procédé de détermination d'un agent (AC) conversationnel d'une interface (IHM) homme-machine sur un terminal (T), ledit agent conversationnel étant configuré pour interagir avec un utilisateur (U) dudit terminal via l'interface homme-machine, ledit procédé comprenant les étapes suivantes: a) sur requête (RQ) d'une interaction de l'utilisateur avec l'agent conversationnel reçue par un serveur (S), calcul (300), par le serveur, d'au moins une donnée (Z1, Z2, ..., Zm) de personnalité de l'utilisateur; b) sélection (400), par le serveur, d'au moins un spécimen (AC11, AC21, ..., ACm1, ACm2, ..., ACmn) d'agent conversationnel correspondant à ladite au moins une donnée de personnalité de l'utilisateur ; et c) envoi (500), par le serveur vers le terminal, d'un message de réponse à ladite requête, ledit message comprenant ledit au moins un spécimen d'agent conversationnel.

## Description

### Arrière-plan de l'invention

La présente invention se rapporte au domaine général des télécommunications. En particulier, l'invention concerne un procédé de détermination d'un agent conversationnel sur un terminal d'un utilisateur.

De nombreuses solutions de télécommunications sont aujourd'hui mises en oeuvre pour permettre d'établir une communication entre une personne et un terminal distant au moyen de messages instantanés via un ordinateur, un téléphone mobile, un modem ou tout autre type de dispositif électronique d'un fournisseur d'accès à un réseau, par exemple à l'Internet.

Les procédés et les dispositifs de communication de type messagerie instantanée sont exploités de manière grandissante par le grand public et par les entreprises. Dans ce contexte, il est connu des interfaces homme-machine animées par des agents conversationnels, dits assistants virtuels, et qui sont configurés pour interagir avec un utilisateur par l'intermédiaire d'un terminal.

Un agent conversationnel installé sur le terminal d'un utilisateur, par exemple via des applications de messagerie, permet de répondre à des requêtes textuelles ou vocales d'un utilisateur. Un dialogue peut s'établir entre l'agent conversationnel et l'utilisateur afin de répondre à des questions ou de mettre en oeuvre une action particulière.

On peut citer par exemple des agents conversationnels spécialisés dans les prévisions météorologiques pour répondre à des questions du type « Quel temps fera-t-il demain à Paris ? », ou des agents conversationnels spécialisés dans la domotique pour configurer et commander des appareils distants de l'utilisateur. On peut aussi citer par exemple des agents conversationnels spécialisés dans la lecture de contenus multimédias, dans la gestion d'objets connectés, dans la commande de biens ou de services, ou encore dans la communication avec d'autres utilisateurs.

Il est connu que les interactions avec un agent conversationnel, ou avec une interface homme-machine sur un terminal et animée par un tel agent, aident les utilisateurs à interagir facilement et rapidement avec une ou plusieurs plateformes digitales, par exemple pour effectuer des tâches spécifiques, pour rechercher des informations ou encore pour communiquer avec d'autres utilisateurs.

Or, en raison du nombre toujours plus important de plateformes digitales et d'utilisateurs de ces plateformes, les réponses fournies par un agent conversationnel ne sont pas toujours pertinentes ni adaptées à la nature des demandes formulées par un utilisateur donné. Il en résulte notamment une perte de temps, d'énergie, de ressources et de confort de la part des utilisateurs.

Les agents conversationnels connus sont en effet programmés pour agir selon un ou plusieurs schémas préétablis, qui ne tiennent pas compte du contexte spécifique dans lequel les requêtes de l'utilisateur sont formulées.

Par exemple, un utilisateur préparant un voyage à l'étranger est intéressé d'obtenir d'un agent conversationnel un grand nombre d'informations précises à l'égard de sa future destination, mais ne voudra pas se voir proposer d'informations du même type à son retour de voyage.

De même, un utilisateur de personnalité très ouverte peut demander à un agent conversationnel de lui proposer des suggestions d'activités ou de contenus sortant de l'ordinaire, tandis qu'un utilisateur de personnalité moins ouverte attend d'un agent conversationnel qu'il lui propose des activités ou des contenus conformes à ses habitudes.

Il existe donc un besoin de pouvoir déterminer, sur un terminal, un agent conversationnel animant une interface homme-machine configurée pour interagir avec un ou plusieurs utilisateurs différents.

En outre, il existe un besoin d'optimiser la détermination d'un tel agent conversationnel pour tenir compte des habitudes d'utilisation, des habitudes de communication ou encore de la personnalité d'un utilisateur donné.

### Objet et résumé de l'invention

Afin de répondre à ce ou à ces besoins, l'invention concerne, selon un premier aspect, un procédé de détermination d'un agent conversationnel d'une interface homme-machine sur un terminal, ledit agent conversationnel étant configuré pour interagir avec un utilisateur dudit terminal via l'interface homme-machine, ledit procédé comprenant les étapes suivantes:
a) sur requête d'une interaction de l'utilisateur avec l'agent conversationnel reçue par un serveur, calcul, par le serveur, d'au moins une donnée de personnalité de l'utilisateur;
b) sélection, par le serveur, d'au moins un spécimen d'agent conversationnel correspondant à ladite au moins une donnée de personnalité de l'utilisateur ; et
c) envoi, par le serveur vers le terminal, d'un message de réponse à ladite requête, ledit message comprenant ledit au moins un spécimen d'agent conversationnel.

Dans les présentes, un agent conversationnel est un automate configuré pour répondre à des messages envoyés par un utilisateur. Un agent conversationnel peut interpréter des commandes ou des mots clefs compris dans des messages qu'il reçoit. Un agent conversationnel est généralement mis en œuvre par un programme informatique exécuté sur un dispositif électronique tel qu'un ordinateur et comprenant des moyens adaptés pour recevoir et émettre des commandes ou des messages instantanés, de type textuel, vocal ou visuel.

Dans les présentes, une interface homme-machine est tout type de système permettant de connecter un individu à une machine et de présenter des données sous des formes diverses, par exemple de façon textuelle, sonore et/ou visuelle. Il peut s'agir d'un écran intégré à une machines par exemple un écran d'ordinateur ou une tablette tactile, un haut-parleur, un projecteur holographique, etc.

Ainsi, le procédé de détermination d'un agent conversationnel selon l'invention permet de configurer une interface homme-machine sur un terminal d'un utilisateur en fonction de messages produits ou consultés directement par cet utilisateur. Cette configuration permet d'adapter un agent conversationnel, et donc une interface homme-machine animée par celui-ci, à un ou plusieurs utilisateurs donnés.

En particulier, un agent conversationnel déterminé par le procédé de l'invention améliore le confort de l'utilisateur interagissant avec l'interface homme-machine correspondante en économisant l'énergie et les ressources dépensées lors de son utilisation, par exemple en réduisant le nombre de messages échangés.

Dans un mode de réalisation de l'invention, le procédé comprend en outre une étape préalable de lecture par ledit serveur d'au moins un message échangé par l'utilisateur sur une boîte de messages, l'étape de calcul du procédé étant en outre mise en œuvre au moyen d'une analyse sémantique appliquée audit au moins un message, ladite analyse sémantique utilisant un algorithme linguistique appliqué aux textes contenus dans ledit message.

Dans les présentes, des boîtes de message sont utilisées : une boîte de messages est, en toute généralité, assimilable à une base de données connectée à un réseau. Une boîte de messages est par exemple un serveur de réseaux sociaux, une base de données publique ou commerciale, une page de l'Internet sur laquelle sont hébergés des blogs ou des contenus multimédias, une plateforme numérique à laquelle un utilisateur peut accéder via un terminal ou encore une mémoire de stockage sur laquelle sont enregistrés des messages ou des courriers électroniques d'utilisateurs.

Dans les présentes, une analyse sémantique est un type d'analyse de messages qui permet d'en établir une signification en utilisant le sens des éléments ou des mots contenus dans ceux-ci.

Dans les présentes, une analyse sémantique peut utiliser un ou plusieurs algorithmes linguistiques permettant de calculer une ou plusieurs grandeurs numériques à partir de textes contenus dans ces messages et exprimés en langage naturel.

Dans un mode de réalisation de l'invention, l'étape de lecture comprend une sous-étape d'acquisition, par un capteur, d'au moins un paramètre de l'utilisateur, ledit paramètre étant choisi parmi une donnée d'identification et/ou une donnée de sécurité.

Ceci permet d'adapter la détermination d'un agent conversationnel à l'identité de l'utilisateur et de sécuriser les étapes du procédé sur la base de caractéristiques personnelles, physiques ou biométriques, de celui-ci.

Dans un mode de réalisation de l'invention, le message de réponse comprend une combinaison dudit au moins un spécimen d'agent conversationnel, ladite combinaison étant pondérée à hauteur de l'au moins une donnée calculée de personnalité de l'utilisateur.

Ceci permet de configurer un agent conversationnel en fonction de plusieurs caractéristiques de personnalité de l'utilisateur.

Dans un mode de réalisation de l'invention, les étapes de lecture calcul, de sélection et d'envoi sont mises en œuvre de manière itérative.

Ceci permet de mettre à jour régulièrement, avec une fréquence adaptée aux besoins de l'utilisateur, un agent conversationnel sur la base d'un nombre croissant de messages et de données de l'utilisateur. Grâce à ces dispositions, l'agent conversationnel présente un caractère évolutif.

Dans un mode de réalisation de l'invention, le procédé comprend en outre une étape préalable d'initialisation du terminal par l'utilisateur.

Ceci permet de de définir une configuration par défaut du terminal, par exemple pour démarrer le procédé de détermination à partir de celui-ci. Cette étape préalable permet également de démarrer, à partir du terminal, une communication entre l'utilisateur et une interface homme-machine sur le terminal.

Dans un mode de réalisation de l'invention, au moins une donnée de personnalité de l'utilisateur comprend au moins un paramètre numérique, par exemple un nombre entier supérieur ou égal à 0 et inférieur ou égal à 10 ou à 100, ledit paramètre étant sélectionné parmi un degré d'intérêt, un paramètre d'ouverture, un paramètre de conscienciosité, un paramètre d'extraversion, un paramètre d'agréabilité et un paramètre de neuroticisme.

Dans les présentes, un degré d'intérêt le nombre de fois qu'un utilisateur a produit ou consulté des messages concernant des thèmes différents. Un paramètre d'ouverture quantifie le trait de personnalité correspondant d'un utilisateur vis-à-vis de son inclination pour l'art, l'aventure, les idées peu communes, la curiosité et l'imagination. Un paramètre de conscienciosité quantifie le trait de personnalité d'un utilisateur vis-à-vis de son inclination pour l'autodiscipline, le respect des obligations, l'organisation et l'orientation vers des buts. Un paramètre d'extraversion quantifie le trait de personnalité d'un utilisateur vis-à-vis de son inclination pour l'énergie, les émotions positives, la tendance à chercher la stimulation et la compagnie des autres et la tendance à aller de l'avant. Un paramètre d'agréabilité quantifie le trait de personnalité d'un utilisateur vis-à-vis de son inclination pour la compassion et la coopération envers ou avec d'autres personnes. Un paramètre de neuroticisme quantifie le trait de personnalité d'un utilisateur vis-à-vis de son inclination pour exprimer de la colère, de l'inquiétude et la dépression.

Dans les présentes, ces paramètres sont calculables à partir du type et du nombre de mots contenus dans un message analysé, par exemple au moyen d'une analyse sémantique.

L'utilisation de ces différents paramètres permet d'adapter un agent conversationnel à la personnalité de cet utilisateur, qui est stable au cours du temps.

Dans un mode de réalisation de l'invention, la donnée de personnalité de l'utilisateur comprend en outre une moyenne, un mode ou une médiane dudit au moins un paramètre numérique que comprend ladite donnée de personnalité de l'utilisateur.

Ceci permet de configurer un agent conversationnel en fonction d'un ensemble de plusieurs données de personnalité.

Dans un mode de réalisation de l'invention, l'étape d'envoi comprend une sous-étape de copie, par le serveur, du message de réponse, de l'au moins une donnée de personnalité de l'utilisateur et/ou d'au moins un spécimen d'agent conversationnel sur le terminal ou sur un autre serveur.

Ceci permet au terminal ou cet autre serveur de conserver en mémoire un score utilisateur ou un spécimen d'agent conversationnel qui peut être réemployé par la suite. Ceci permet aussi au terminal ou à cet autre serveur de transmettre à l'utilisateur des informations, des suggestions ou des services supplémentaires venant d'autres sources que le serveur.

Dans un mode de réalisation de l'invention, la donnée de personnalité de l'utilisateur est déterminée manuellement par l'utilisateur.

Ceci permet de déterminer plus rapidement un agent conversationnel à partir d'au moins un spécimen en s'affranchissant de l'étape de lecture et de calcul.

Dans un mode de réalisation de l'invention, la requête est émise par le terminal.

Ceci permet au terminal ou à l'interface d'être à l'initiative de la communication.

Dans un mode de réalisation de l'invention, l'étape d'envoi comprend une sous-étape d'installation dudit au moins un spécimen d'agent conversationnel sur le terminal ou sur le serveur.

Ceci permet de d'animer une interface homme-machine avec un agent conversationnel de manière permanente.

Selon un autre aspect, les différentes étapes de détermination selon l'invention sont mises en œuvre par un logiciel ou programme d'ordinateur. Ce logiciel ou programme est susceptible d'être exécuté par un ordinateur ou par un processeur, par exemple un processeur de données, ce logiciel ou programme comportant des instructions pour commander l'exécution des étapes d'un procédé de détermination d'un agent conversationnel. Ces instructions sont stockables dans une mémoire d'un dispositif informatique, par exemple un serveur, chargées puis exécutées par un processeur de ce dispositif numérique.

Ce logiciel ou programme d'ordinateur peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

En particulier, ce programme d'ordinateur comporte des instructions pour l'exécution d'un procédé de détermination d'un agent conversationnel selon l'une quelconque des caractéristiques précédentes, prises individuellement ou selon toute combinaison techniquement possible, lorsque ledit programme est exécuté par un processeur.

Selon encore un autre aspect, l'invention a pour objet un moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des caractéristiques précédentes, prises individuellement ou selon toute combinaison techniquement possible.

Selon encore un autre aspect, l'invention a pour objet un serveur de détermination d'un agent conversationnel, caractérisé en ce qu'il comprend un circuit de traitement pour la mise en œuvre du procédé selon l'une quelconque des caractéristiques précédentes, prises individuellement ou selon toute combinaison techniquement possible. Ledit serveur peut comprendre, en outre, des modules logiciels et/ou matériels, le terme « module » correspondant à un composant logiciel, matériel ou à un ensemble de composants matériels et/ou logiciels, apte à mettre en œuvre une fonction ou un ensemble de fonctions.

### Brève description des dessins

D'autres caractéristiques, détails et avantages de l'invention apparaîtront à la lecture de la description détaillée ci-après, et à l'analyse des dessins annexés, sur lesquels :
[Fig. 1], la figure 1, représente une vue schématique d'un environnement comportant notamment un terminal, une interface homme-machine sur un terminal, un serveur et une pluralité de boîtes de messages selon un mode de réalisation particulier de l'invention ;
[Fig. 2], la figure 2, représente, sous forme d'organigramme, un exemple d'étapes d'un procédé de détermination selon un mode de réalisation particulier de l'invention ;
[Fig. 3], la figure 3, représente une vue schématique d'un exemple d'étapes de calcul, de sélection et d'envoi d'un procédé de détermination selon un mode de réalisation particulier de l'invention ; et
[Fig. 4], la figure 4, représente un bloc-diagramme schématique d'un circuit de traitement pour la mise en œuvre d'un ou plusieurs modes de réalisation de l'invention.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

### Description des modes de réalisation

Dans la suite de la description, une interaction entre un utilisateur, un terminal, une interface homme-machine de ce terminal et/ou un agent conversationnel animant cette interface consiste en un échange de messages. En outre, l'envoi et la réception de messages particuliers permet de provoquer un changement d'état interne de ces éléments. Par exemple, une interaction entre un terminal et un serveur peut provoquer la modification d'une base de données interne de ce serveur ou encore le déclenchement d'une action de commande à distance d'un objet connecté au terminal au moyen d'un réseau.

Dans la suite de la description, différentes entités sont connectées entre elles par l'intermédiaire de différents moyens, par exemple via une connexion filaire de type Ethernet ou CPL, une connexion sans fil par exemple de type WiFi ou Bluetooth, ou tout autre type de connexion pouvant varier selon le matériel préféré pour la mise en œuvre de l'invention.

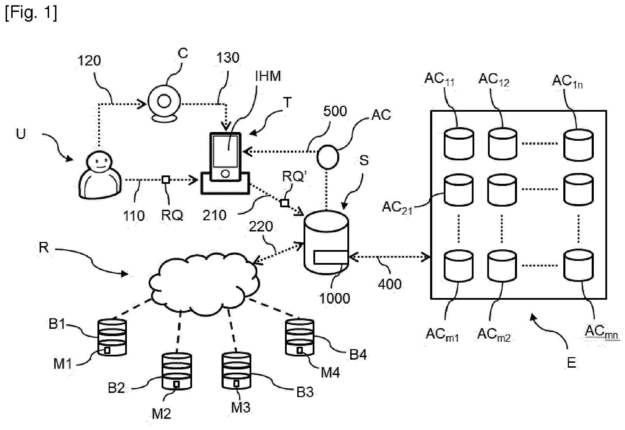

Un mode de réalisation de l'invention est à présent décrit en référence à la figure 1, qui représente schématiquement un environnement permettant la mise en œuvre d'un procédé de détermination d'un agent conversationnel, cet environnement comportant notamment un terminal T d'un utilisateur U, une interface homme-machine IHM installée sur ce terminal T, un serveur S et ici quatre boîtes de messages B1, B2, B3, B4.

Le terminal T est un dispositif électronique, par exemple un ordinateur fixe, un ordinateur portable, un boîtier de connexion sans fil, un téléphone mobile, une tablette, une montre, un bracelet ou tout type d'objet connecté.

Le terminal T comprend de préférence un système interactif configuré pour permettre à l'interface homme-machine de recevoir des messages textuels ou vocaux d'un utilisateur U et pour dialoguer avec lui au moyen de messages textuels ou vocaux.

Le serveur S est un dispositif configuré pour être connecté à un ou plusieurs terminaux ainsi qu'à de bases de données. Le serveur S comprend en outre un circuit 1000 de traitement de l'information qui sera décrit par la suite. Le serveur S est connecté au terminal T ainsi qu'à une pluralité de boîtes de messages pouvant être de nombre, d'emplacement et de nature différents.

Selon un mode de réalisation de l'invention, le serveur S est connecté à au moins une boîte de messages. Les boîtes de message sont accessibles par différents moyens, en particulier par le serveur S et le terminal T ou tout autre dispositif électronique de l'utilisateur U, pour produire ou pour consulter des contenus. A titre d'exemple, on considère quatre boîtes de message B1, B2, B3 et B4, chaque boîte comprenant un message M1, M2, M3 et M4 correspondants.

Dans les présentes, un message peut être n'importe quelle donnée textuelle ou multimédia. De préférence, ce message comprend une donnée textuelle ou multimédia choisie parmi un message échangé via un réseau de communication, un commentaire sur un réseau, une vidéo, une image ou un son. Un message échangé via un réseau de communication est par exemple un courrier électronique, un message instantané (SMS) ou encore un tweet.

Les messages que comprennent les boîtes de message peuvent donc être de différents types, par exemple des messages textuels, des messages vocaux ou des contenus multimédias dont des textes peuvent être obtenus au moyen de techniques connues. Un message, lorsqu'il n'est pas une donnée textuelle, peut comprendre des mots exprimés dans un format de langage naturel et pouvant être extraits grâce à différents moyens connus. Par exemple, il est connu des convertisseurs capables d'extraire le texte d'une vidéo, ou de reconnaître des caractères ou des mots dans une image, indépendamment de la langue utilisée.

De manière non limitative, par exemple, la boîte B1 est une boîte de messages rédigés par l'utilisateur U comprenant des courriers électroniques, des messages SMS ou des commentaires laissés sur un réseau social. La boîte B2 est par exemple une mémoire où sont stockées des prévisions météorologiques consultées par l'utilisateur, la boîte B3 est un serveur comprenant des articles d'actualité des télécommunications auxquels contribue l'utilisateur et la boîte B4 est un dispositif émettant des notifications relatives au trafic routier dans le voisinage de l'utilisateur.

Comme représenté sur la figure 1, un utilisateur U établit, au cours d'une sous-étape 110 de démarrage, une communication avec un terminal T sur lequel est installée une interface IHM homme-machine.

La communication établie par l'utilisateur lors de cette sous-étape 110 de démarrage peut être initiée par exemple au moyen d'une requête RQ de l'utilisateur U envoyée au terminal T. Une telle requête peut être de nature textuelle ou vocale, et peut comprendre différents types de données, notamment une question formulée par l'utilisateur U ou une commande de mise en marche d'un appareil.

Parmi différents exemples de types de requêtes, on peut citer : une saisie vocale, une saisie de texte, des données biométriques, un clic ou une combinaison de ces éléments. Une saisie vocale peut être reçue à partir d'appareils mobiles tels qu'un téléphone, une tablette, un microphone, un casque, un système vocal d'automobile, une messagerie, etc. Une saisie de texte peut être reçue à partir de claviers d'ordinateurs ou d'appareils mobiles, de télécommandes, de courriers électroniques, de messages instantanés, de textes de recherche et d'autres interactions textuelles via des dispositifs électroniques de tout type.

Selon un mode de réalisation non représenté, la sous-étape 110 de démarrage comprend l'émission d'une requête depuis l'interface IHM ou depuis le terminal T vers l'utilisateur U, par exemple une requête de communication qui demande l'identification d'un utilisateur.

Selon un mode de réalisation de l'invention, un capteur C acquiert, au cours d'une sous-étape 120 d'acquisition, des données qu'il transmet ensuite au terminal T lors d'une sous-étape 130 de transmission. Les données acquises sont par exemple des données de l'utilisateur U. Le capteur C est distinct du terminal T et peut être un clavier, une souris, une caméra, un dispositif biométrique tel qu'un lecteur d'empreintes, ou tout autre type de détecteur configuré pour identifier l'utilisateur U.

Cette sous-étape 120 d'acquisition permet d'inclure, dans la requête RQ transmise au serveur S, des données supplémentaires utiles à l'identification de l'utilisateur U parmi d'autres utilisateurs, par exemple sur la base d'informations personnelles ou de caractéristiques physiques, ou biométriques.

En variante, les données acquises lors de la sous-étape 120 d'acquisition peuvent être transmises directement du capteur C vers le serveur S sans passer par le terminal T.

Dans le procédé de détermination selon l'invention, la requête RQ est une requête d'une proposition d'un agent conversationnel de l'utilisateur U. Un utilisateur U peut par exemple demander au terminal de déterminer un agent AC conversationnel qui lui correspond.

Selon un mode de réalisation de l'invention, la requête comprend d'autres paramètres associés à l'utilisateur U, par exemple une donnée LOG d'identification et/ou une donnée PWD de sécurité, comme un mot de passe.

Lorsque le message échangé au cours de la sous-étape 110 comprend une telle requête RQ, le terminal T la transfère, éventuellement sous la forme d'une requête RQ' modifiée, vers le serveur S. Ce transfert est mis en œuvre au cours d'une sous-étape 210 de transfert. La requête RQ' modifiée peut se distinguer de la requête RQ initiale en ce qu'elle comprend des informations supplémentaires, par exemple des informations prédéterminées relatives au terminal T ou à l'interface IHM. Ceci permet d'éviter à l'utilisateur U de fournir ces informations systématiquement dans ses demandes.

Sur réception de la requête RQ ou de la requête RQ' modifiée, le serveur S accède aux boîtes de messages B1, B2, B3, B4 au cours d'une sous-étape 220 de communication. Au cours de cette sous-étape 220 de communication, le serveur S lit en outre un ou plusieurs messages sur ces boîtes, par exemple des messages M1, M2, M3, M4 produits ou consultés par l'utilisateur U. De préférence, la sous-étape 220 de communication est mise en œuvre par l'intermédiaire du réseau R.

Comme illustré sur les figures, et suivant les sous-étapes 110, 120, 130, 210 et 220, une étape 300 de calcul, une étape 400 de sélection d'un agent AC conversationnel parmi un ensemble E de spécimens AC11, AC21, ... ACm1, ACm2, ..., ACmn et une étape 500 d'envoi dudit agent AC depuis le serveur S vers le terminal T sont mises en œuvre.

Selon un mode de réalisation de l'invention, lesdits spécimens d'agent conversationnel font partie d'un ensemble E situé sur le serveur S. Chacun des spécimens d'agent conversationnel peut être associé à une donnée de personnalité de l'utilisateur.

En variante, l'ensemble E est situé sur un serveur distinct du serveur S et connecté audit serveur S.

Selon un mode de réalisation de l'invention, l'ensemble E comprend au moins autant de spécimens d'agent conversationnel que de valeurs possibles pour la donnée de personnalité de l'utilisateur.

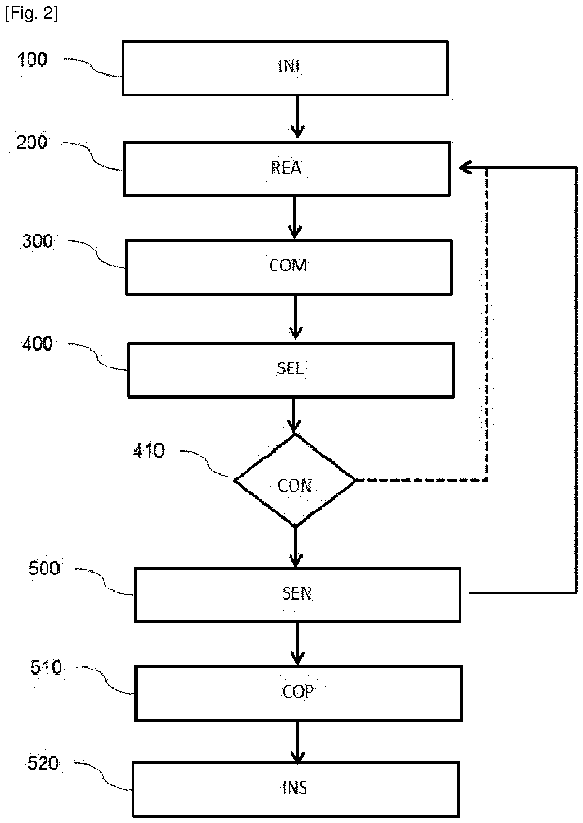

La figure 2 représente, sous forme d'organigramme, plusieurs étapes d'un procédé de détermination selon un mode de réalisation de l'invention.

Selon un mode de réalisation de l'invention, le procédé comprend une étape 100, INI, dite étape d'initialisation, qui comprend la sous-étape 110 de démarrage, la sous-étape 120 d'acquisition et/ou la sous-étape 130 de transmission décrites précédemment.

Le procédé comprend en outre une étape 200, REA, dite étape de lecture, qui est mise en œuvre sur réception, par le serveur S, d'une requête RQ d'une proposition d'un agent conversationnel.

L'étape 200 de lecture comprend notamment la sous-étape 210 de transfert et la sous-étape 220 de communication décrites précédemment. L'étape 200 de lecture peut aussi comprendre une sous-étape d'aqcuisition.

Au cours de l'étape 200 de lecture, le serveur S accède à au moins une boîte de message choisie parmi les boîtes B1, B2, B3, B4 et effectue une lecture d'un ou de plusieurs messages M1, M2, M3, M4 échangés par l'utilisateur U sur chacune de celles-ci.

Par exemple, le serveur S se connecte à la boîte B1 et lit un courrier électronique M1 de l'utilisateur U envoyé par le terminal T et stocké sur la boîte B1, le serveur S se connecte à la boîte B2 et lit un bulletin météo M2 consulté par l'utilisateur U, le serveur S se connecte à la boîte B3 et lit un article M3 rédigé par l'utilisateur U dans le domaine de l'actualité des télécommunications et le serveur S se connecte à la boîte B4 et lit une notification M4 du trafic routier dans la région de Paris. Au cours de la sous-étape 220, les messages M1 à M4 peuvent être copiés en partie ou dans leur intégralité sur le serveur S à des fins d'analyse, de manière sécurisée, et avec l'autorisation de l'utilisateur.

Pour accéder à ce ou ces messages, le serveur S peut utiliser un paramètre fourni par l'utilisateur, tel qu'une donnée LOG d'identification et/ou une donnée PWD de sécurité, par exemple lorsque la lecture des messages nécessite un accès sécurisé. Le message est éventuellement copié sur le serveur lors de l'étape 200 de lecture, ou consulté en lecture seule, pour limiter le partage de données.

Le procédé comprend en outre une étape 300, COM, dite étape de calcul, qui est mise en œuvre de manière continue ou ponctuelle par le serveur S après que celui-ci a accédé à au moins un message.

Au cours de l'étape 300 de calcul, le serveur calcule au moins une donnée de personnalité de l'utilisateur associée à un ou plusieurs messages lus lors de l'étape 200 de lecture.

Par exemple, le serveur S détermine une donnée Z1 de personnalité de l'utilisateur associée au message M1, une donnée Z2 de personnalité de l'utilisateur associée au message M2, etc. En variante, le serveur S peut déterminer une seule donnée de personnalité de l'utilisateur associée à la combinaison de tous les messages lus lors de la sous-étape 220.

Selon un mode de réalisation de l'invention, cette détermination se fait au moyen d'une analyse sémantique, qui est appliquée aux textes contenus dans les messages lus par le serveur S, par exemple en fonction d'un dictionnaire prédéterminé de mots ou de combinaisons de mots.

Cette analyse sémantique peut se faire via l'application de différents algorithmes linguistiques connus. Ces algorithmes identifient par exemple le nombre de termes, de synonymes, de mots-clés et/ou d'expressions en relation avec un thème donné. Les résultats fournis par ces algorithmes permettent de quantifier des informations contenues dans un message produit ou accédé par un utilisateur donné.

Avantageusement, une telle analyse sémantique permet de quantifier des informations contenues dans un message produit ou accédé par un utilisateur donné.

Les termes identifiés peuvent être enregistrés préalablement dans une ou plusieurs bases de données linguistiques accessibles par le serveur S, qui les compare aux termes employés dans le message et calcule en temps réel ou de manière différée une donnée de personnalité de l'utilisateur associée à chaque message analysé. Ces bases de données linguistiques peuvent être mises à jour de manière régulière ou ponctuelle.

Lorsque ces éléments sont identifiés, chacun des messages se voit définir un ou plusieurs paramètres numériques, lesdits paramètres pouvant être associés à l'utilisateur puisque ce dernier a produit ou consulté ces messages. Ces paramètres numériques peuvent être de différent type, par exemple un nombre quantifiant un trait de personnalité ou un temps de lecture d'un contenu de l'utilisateur U. La valeur de ce nombre peut dépendre de la densité et/ou du thème des éléments identifiés dans le texte.

En variante, l'utilisateur U peut lui-même déterminer, au moyen du terminal T, la valeur de ces paramètres numériques ou de la donnée de personnalité de l'utilisateur. Avantageusement, une telle détermination manuelle permet à la donnée de personnalité de l'utilisateur de ne pas dépendre des messages de l'utilisateur, et donc à l'utilisateur U de sélectionner directement un agent conversationnel à partir des spécimens d'agent conversationnel.

Selon un mode de réalisation de l'invention, une donnée de personnalité de l'utilisateur comprend plusieurs paramètres numériques.

Suivant un premier exemple, un calcul d'une donnée de personnalité de l'utilisateur utilisateur peut se faire sur la base de degrés d'intérêt concernant des articles d'actualité en ligne, des prévisions météorologiques, des blogs de culture générale, des documents scientifiques, etc. Sur la base de l'analyse de ces messages de l'utilisateur, on peut considérer trois degrés d'intérêt de l'utilisateur, et établir que ces messages concernent à 70% des demandes d'information liées aux prévisions météorologiques, à 20% des commentaires sur un site d'actualité des télécommunications et à 10% des notifications relatives aux conditions de circulation dans son voisinage. Une donnée de personnalité de l'utilisateur associée pouvant être établie est par exemple (7/10, 2/10, 1/10).

Suivant un deuxième exemple, un calcul d'une donnée de personnalité de l'utilisateur peut se faire sur la base de paramètres techniques caractérisant des messages produits ou consultés par l'utilisateur. Ainsi, un message donné peut avoir une longueur, une langue, un ton ou un mode de présentation donné. Ces paramètres techniques peuvent donc aussi caractériser les messages émis par un agent conversationnel animant une interface homme-machine qui interagit avec un utilisateur. Si un utilisateur interagit au moyen de messages textuels courts avec un agent conversationnel, cet agent conversationnel peut être déterminé de sorte à répondre au moyen de messages de longueur similaire. Si un utilisateur interagit au moyen de messages vocaux masculins, l'agent conversationnel correspondant peut être déterminé au moyen de messages vocaux également masculins, etc.

Suivant un troisième exemple, un calcul d'une donnée de personnalité de l'utilisateur peut se faire sur la base de traits de personnalité définis sous la forme de cinq paramètres numériques, définis sur la base d'un modèle empirique dit modèle des « Big 5 ».

D'après ce modèle des « Big 5 », les traits de personnalité d'un utilisateur U peuvent être quantifiés selon cinq paramètres numériques parmi lesquels un paramètre d'ouverture, un paramètre de conscienciosité, un paramètre d'extraversion, un paramètre d'agréabilité et un paramètre de neuroticisme.

Dans le cas du modèle des « Big 5 », chacun de ces paramètres est un nombre entier supérieur ou égal à 1 et inférieur ou égal à 5. La valeur de ces paramètres définit ainsi une note de 1/5 à 5/5 évaluant l'importance du trait de personnalité correspondant de l'utilisateur U. Par exemple, une note minimale (1/5) pour le paramètre d'extraversion correspond à un utilisateur très introverti et la note maximale (5/5) correspond à un utilisateur très extraverti.

Selon une variante, ces paramètres prennent pour valeur un nombre entier supérieur ou égal à 0 et inférieur ou égal à 10. Selon une autre variante, ces paramètres prennent pour valeur un nombre entier supérieur ou égal à 0 et inférieur ou égal à 100, etc.

A l'issue de l'étape 300 de calcul, le serveur S a associé à chaque message, ou à l'ensemble des messages, au moins une donnée de personnalité de l'utilisateur.

Le procédé comprend en outre une étape 400, SEL, dite étape de sélection, au cours de laquelle le serveur S met en œuvre un choix d'au moins un spécimen d'agent conversationnel correspondant à une ou plusieurs données de personnalité de l'utilisateur qui ont été calculées au cours de l'étape 300 de calcul.

De manière non limitative, un spécimen d'agent conversationnel est un agent conversationnel dont la donnée de personnalité de l'utilisateur correspondante est prédéfinie.

Selon un mode de réalisation de l'invention, le serveur S accède à un ensemble E, par exemple situé dans une mémoire de stockage dudit serveur S, incluant une pluralité de spécimens AC11, AC21, ..., ACm1, ACm2, ..., ACmn d'agent conversationnel, plusieurs de ces spécimens pouvant être combinés ensemble pour former un seul agent AC dont la donnée de personnalité de l'utilisateur correspondante est pondérée à hauteur des données de personnalité desdits spécimens.

Ainsi, par exemple, un agent AC conversationnel peut être formé par la combinaison de quatre spécimens AC11, AC22, AC33 et AC44 correspondant aux données de personnalité de l'utilisateur respectives 1/5, 1/5, 3/5 et 5/5. L'agent AC conversationnel peut être le résultat de toute pondération souhaitée à hauteur de ces quatre spécimens, par exemple à 10%, 10%, 30% et 50%. Selon un autre exemple, l'agent AC conversationnel peut être formé par un seul spécimen dont les données de personnalité de l'utilisateur sont respectivement 1/5, 1/5, 3/5 et 5/5.

Une possibilité de réaliser cette pondération est d'inclure le calcul d'une mesure de tendance centrale, par exemple une moyenne, un mode ou une médiane des données de personnalité de l'utilisateur des spécimens. Dans le cas d'une moyenne, l'agent conversationnel formé par la combinaison des quatre spécimens précédents correspond ainsi à une donnée de personnalité de l'utilisateur de 1/2 ; dans le cas d'un mode, l'agent conversationnel correspond à une donnée de personnalité de l'utilisateur de 1/5 et dans le cas d'une médiane, l'agent conversationnel correspond à une donnée de personnalité de l'utilisateur de 3/5.

Lors de l'étape 400 de sélection, le serveur S choisit, parmi un ensemble E, un ou plusieurs spécimens d'agent conversationnel dont les données de personnalité de l'utilisateur correspondent à celles qui ont été calculées au cours de l'étape 300 de calcul.

Comme décrit précédemment, ce choix est effectué parmi un ensemble E de spécimens d'agent conversationnel, cet ensemble comprenant par exemple les spécimens AC11, AC21, ..., ACm1 associés à un type de boîte B1 de message donné. Par exemple, les spécimens AC11, AC21, ..., ACm1 sont des agents conversationnels associés à des courriers électroniques ou à des commandes d'objets connectés dans le domicile de l'utilisateur U.

Ces spécimens AC11, AC21, ..., ACm1 peuvent chacun être associés à une valeur différente d'au moins un paramètre numérique de la donnée de personnalité de l'utilisateur. Par exemple, le spécimen AC11 peut différer du spécimen AC21 en ce que leurs paramètres d'extraversion sont respectivement de 1/5 et de 2/5. Ou encore, le spécimen AC11 peut se distinguer du spécimen AC21 de par différentes valeurs de leurs degrés d'intérêt, par exemple de leurs degrés d'intérêt pour des notifications relatives aux conditions de circulation dans le voisinage de l'utilisateur sont respectivement de 1/10 et de 2/10, etc.

De préférence, l'ensemble E comprend au moins autant de spécimens d'agent conversationnel que de valeurs possibles de données de personnalité de l'utilisateur.

On comprendra ici par données de personnalité de l'utilisateur correspondantes que le ou les spécimens sélectionnés au cours de l'étape 400 sont ceux présentant une donnée de personnalité de l'utilisateur suffisamment proche numériquement d'au moins une donnée de personnalité de l'utilisateur calculée au cours de l'étape 300.

Dans un cas particulier, on comprendra par données de personnalité de l'utilisateur correspondantes que le ou les spécimens sélectionnés au cours de l'étape 400 sont ceux dont la valeur d'au moins un paramètre numérique est la plus proche de la valeur du paramètre numérique correspondant de la donnée de personnalité de l'utilisateur calculée au cours de l'étape 300. Par exemple, une sélection d'un spécimen parmi un ensemble E de trois spécimens AC12, AC13 et AC14 dont les données de personnalité de l'utilisateur sont respectivement 2/5, 3/5 et 4/5 revient à sélectionner le spécimen AC12 si la donnée de personnalité de l'utilisateur calculée est de 1/5, le spécimen AC13 si la donnée de personnalité de l'utilisateur calculée est de 3/5 et le spécimen AC14 si la donnée de personnalité de l'utilisateur calculée est de 5/5.

Selon un mode de réalisation de l'invention, à l'issue de l'étape 400 de sélection, une sous-étape 410 de confirmation, CON, semblable à la sous-étape 120 d'acquisition et déclenchée par le serveur S, peut être mise en œuvre pour vérifier que l'utilisateur U du terminal T pour lequel un agent AC conversationnel est déterminé est bien le même utilisateur que celui ayant émis la requête RQ initiale. Dans le cas contraire, par exemple si des empreintes digitales de l'utilisateur acquises lors de la sous-étape 410 ne correspondent pas aux empreintes digitales de l'utilisateur U acquises lors de la sous-étape 120, alors le procédé de détermination remet en œuvre au moins l'une des étapes du procédé, par exemple l'étape 200 de lecture ou, en variante, s'interrompt et n'envoie aucun message de réponse à la requête RQ.

Le procédé comprend en outre une étape 500, SEN, dite étape d'envoi, au cours de laquelle le serveur S communique au terminal T un message de réponse à la requête RQ, ce message de réponse comprenant une combinaison d'au moins un spécimen d'agent conversationnel sélectionné au cours de l'étape 400 de sélection.

Une fois reçue par le terminal T, la combinaison AC constitue l'agent conversationnel déterminé pour l'utilisateur U, pour animer l'interface IHM sur ledit terminal, et pour interagir avec ledit utilisateur U.

Selon un mode de réalisation de l'invention, l'étape 500 d'envoi comprend une sous-étape 510 de copie, par le serveur S, d'au moins un message de réponse ou d'au moins un spécimen d'agent conversationnel sur des entités distinctes du serveur.

Selon un mode de réalisation de l'invention, l'étape 500 d'envoi comprend en outre une sous-étape 520 d'installation de la combinaison AC sur le terminal T ou sur le serveur S.

Selon un mode de réalisation de l'invention, les étapes 200 de lecture, 300 de calcul, 400 de sélection et 500 d'envoi sont mises en œuvre de manière itérative.

Avantageusement, la mise en œuvre itérative de ces étapes permet la mise à jour régulière d'un agent AC conversationnel sur la base d'un nombre croissant de messages de l'utilisateur. Il est ainsi possible d'adapter la détermination de l'agent AC sur la base d'une quantité de données de plus en plus grande.

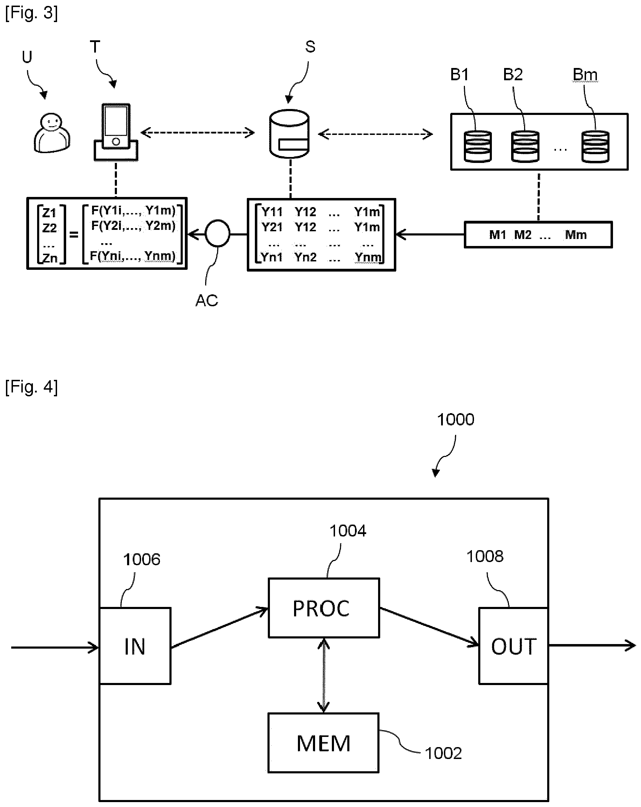

La figure 3 illustre une vue schématique d'un exemple d'étapes de calcul, de sélection et d'envoi d'un procédé de détermination selon un mode de réalisation particulier de l'invention.

Sur requête envoyée du terminal T de l'utilisateur U et reçue par le serveur S, le serveur S accède à des messages M1, M2, ..., Mm localisés sur différentes boîtes de messages B1, B2, ..., Bm.

Au cours de l'étape de calcul, le serveur S calcule pour chaque message accédé, plusieurs paramètres numériques associés par exemple à sa tendance à l'ouverture, à la conscienciosité, à l'extraversion, à l'agréabilité et au neuroticisme.

Par exemple, au message M1 correspondra cinq paramètres Y11, Y21, Y31, Y41 et Y51, au message M2 correspondra cinq paramètres Y12, Y22, Y32, Y42 et Y52, au message M3 correspondra cinq paramètres Y13, Y23, Y33, Y43 et Y53 et au message M4 correspondra cinq paramètres Y14, Y24, Y34, Y44 et Y54, chaque paramètre définissant une note allant de 1/5 à 5/5.

Sur la base de tous ces paramètres, le serveur S déduit une donnée de personnalité de l'utilisateur comprenant cinq paramètres numériques Z1, Z2, Z3, Z4 et Z5. Le paramètre Z1 est par exemple le résultat de l'application d'une fonction F aux paramètres Y11, Y21, Y31, Y41 et Y51 correspondants au message M1, et ainsi de suite pour les paramètres Z2, Z3, Z4 et Z5.

Avantageusement, le nombre de paramètres numériques que comprend chaque donnée de personnalité de l'utilisateur peut être réduite à un seul paramètre numérique à l'aide d'une fonction mathématique dépendant de ces paramètres, par exemple en calculant la moyenne, le mode ou la médiane de ces paramètres. La fonction F peut être par exemple une moyenne mathématique des variables dont elle dépend, de sorte que Z1 égale la somme Y11+Y21+Y31+Y41+Y51 divisée par cinq, et ainsi de suite pour les paramètres Z2, Z3, Z4 et Z5.

Le serveur S sélectionne ensuite, parmi une pluralité de spécimens d'agent conversationnel, un ou plusieurs de ces spécimens combinés à hauteur de la donnée Z de personnalité de l'utilisateur comprenant Z1, Z2, Z3, Z4 et Z5.

Suivant un premier exemple, trois messages M1, M2 et M3 de l'utilisateur U sont accessibles sur une boîte de message B1 par le serveur S, ceux-ci se voyant associés à une donnée de personnalité de l'utilisateur, cette donnée de personnalité de l'utilisateur comprenant trois paramètres quantifiant le degré d'intérêt de l'utilisateur U pour l'actualité des télécommunications, pour les prévisions météorologiques et pour les conditions de circulation dans son voisinage. Le message M1 peut ainsi avoir les notes (1/6, 2/6, 3/6), le message M2 peut avoir les notes (3/6, 2/6, 1/6) et le message M3 peut avoir les notes (2/6, 2/6, 2/6). Le serveur S peut dans ce cas calculer une donnée de personnalité de l'utilisateur égale à (1/3, 1/3, 1/3), dont les paramètres sont les moyennes de ces notes. Le serveur S détermine ensuite un agent AC conversationnel résultant de la combinaison d'une combinaison pondérée de spécimens à hauteur de cette donnée de personnalité de l'utilisateur, par exemple un agent AC conversationnel comprenant trois spécimens d'agent conversationnels : un spécimen AC11 d'agent dédié à l'actualité des télécommunications pour une fraction égale à 1/3, un spécimen AC12 d'agent dédié aux prévisions météorologiques pour une fraction égale à 1/3 et un spécimen AC13 d'agent dédié aux conditions de circulation pour une fraction égale à 1/3.

Suivant un deuxième exemple, deux messages M1 et M2 de l'utilisateur U sont accessibles séparément sur deux boîtes de message B1 et B2 par le serveur S, chacun de ceux-ci se voyant associé à une donnée de personnalité de l'utilisateur comprenant cinq paramètres numériques dont sa tendance à l'ouverture, à la conscienciosité, à l'extraversion, à l'agréabilité et au neuroticisme. Le message M1 peut ainsi avoir les notes (1/5, 1/5, 1/5, 1/5, 5/5) et le message M2 peut avoir les notes (1/5, 1/5, 5/5, 3/5, 1/5). Le serveur S peut dans ce cas calculer une donnée de personnalité de l'utilisateur égale à (1/5, 1/5, 3/5, 2/5, 3/5), dont les paramètres sont les moyennes de ces notes. Le serveur S détermine ensuite un agent AC conversationnel résultant de la combinaison d'une combinaison pondérée de spécimens à hauteur de cette donnée de personnalité de l'utilisateur, par exemple un agent AC conversationnel comprenant un unique spécimen d'agent dont les cinq paramètres numériques sont égaux à celui calculé. L'agent AC conversationnel ainsi déterminé peut présenter des paramètres de traits de personnalité moyennant ceux de l'utilisateur U tels que mesurés à partir du contenu des deux messages M1 et M2.

Avantageusement, une interface IHM animée par un agent AC conversationnel présentant 20% d'extraversion peut être configurée pour interagir très peu avec l'utilisateur et ne fera, par exemple, que répondre aux sollicitations de l'utilisateur. Par exemple, à la question « Quelles sont les conditions de trafic routier ce lundi matin à Paris ?», l'interface IHM répondra simplement «très mauvaises » et ne posera aucune question pour poursuivre l'échange avec l'utilisateur et ne fera aucune proposition spontanée. A l'inverse, une interface IHM animée par un agent AC conversationnel présentant 90% d'extraversion interagit très fortement avec l'utilisateur, c'est-à-dire qu'elle répond de manière plus développée aux questions de l'utilisateur et peut lui faire de multiples propositions. A la même question « Quelles sont les conditions de trafic routier ce lundi matin à Paris ?», l'agent peut répondre : « Aujourd'hui, jour de grève, vos itinéraires habituels de circulation sont bloqués et la neige rend les routes impraticables ; il est conseillé de plutôt utiliser le métro ; souhaitez-vous recevoir des notifications d'horaires de métro adaptées à un départ imminent? » et peut même être à l'initiative d'échanges avec l'utilisateur comme « Souhaiteriez-vous plutôt rester à la maison et regarder un film d'action?», etc.

Ainsi, un utilisateur introverti communiquera de manière plus fluide et plus efficace avec un agent conversationnel qui a été déterminé de sorte à limiter strictement sa réponse aux demandes de l'utilisateur, tandis qu'un utilisateur extraverti interagira plus exhaustivement et plus efficacement avec un agent conversationnel initiant de lui-même la communication ou lui proposant une réponse plus développée aux mêmes demandes.

La figure 4, illustre, selon un mode particulier de réalisation de l'invention, un dispositif 1000 pour mettre en œuvre le procédé de détermination.

Le dispositif 1000, qui est de préférence un circuit intégré, est compris dans le serveur S. Le dispositif 1000 peut aussi être intégré au terminal T ou à tout autre dispositif électronique distinct du terminal T et du serveur S.

Le dispositif 1000 comprend un espace 1002 de stockage, par exemple une mémoire MEM, et une unité 1004 de traitement équipée par exemple d'un processeur PROC. L'espace 1002 de stockage est par exemple une mémoire non volatile (ROM ou Flash, par exemple), et peut constituer un support d'enregistrement, ce support d'enregistrement pouvant en outre comprendre un programme d'ordinateur. Lorsqu'il constitue un support d'enregistrement, l'espace 1002 de stockage peut être lu par le serveur S.

Le dispositif 1000 comprend en outre un module de communication permettant audit dispositif de se connecter à un réseau de télécommunications, par exemple au réseau R, et d'échanger des données avec d'autres dispositifs par l'intermédiaire dudit réseau de télécommunications. Par exemple, le module de communication peut être une interface réseau Wifi ou Ethernet, ou encore un module de communication Bluetooth.

Le module de communication du dispositif 1000 comprend un module 1006 de réception de données, par exemple un récepteur IN, et un module 1008 d'émission de données, par exemple un émetteur OUT.

Le module 1006 est configuré pour recevoir une demande de connexion ou de déconnexion du dispositif 1000 en provenance du terminal T, d'un autre serveur ou de tout autre dispositif électronique. En particulier, le module 1006 est configuré pour recevoir une requête d'une proposition d'un agent conversationnel et un ou plusieurs messages lus sur une boîte de messages auquel le dispositif 1000 peut accéder via un réseau de télécommunications.

Le module 1008 est configuré pour émettre une demande de connexion vers le terminal T, vers un autre serveur ou vers tout autre dispositif électronique. En outre, le module 1008 est configuré pour envoyer au terminal T un message de réponse à une requête reçue par le module 1006, par exemple un message comprenant un spécimen d'agent conversationnel ou une combinaison pondérée de tels spécimens.

L'espace 1002 de stockage, qui peut être sécurisé, est configuré pour enregistrer et stocker toute donnée lue par le module 1006, traitée par l'unité 1004 et/ou envoyée par le module 1008.

L'unité 1004 de traitement, qui peut être pilotée par un programme, est configurée pour mettre en œuvre le procédé de détermination tel que décrit dans l'invention en référence à la figure 2.

À l'initialisation, les instructions d'un programme pilotant l'unité 1004 de traitement, sont par exemple chargées dans une mémoire vive (RAM, par exemple) non représentée que comprend le dispositif 1000 avant d'être exécutées par le processeur de l'unité 1004 de traitement.

En particulier, l'unité 1004 de traitement est configurée pour mettre en œuvre des étapes de calcul, en particulier un calcul d'au moins une donnée de personnalité de l'utilisateur d'un message lu par le module 1006 de réception, ce calcul se faisant au moyen d'une analyse sémantique telle que celle décrite précédemment.

En outre, l'unité 1004 de traitement est configurée pour sélectionner un ou plusieurs spécimens d'agents conversationnels. Ce ou ces spécimens sont par exemple des spécimens stockés dans l'espace 1002 de stockage, et la sélection d'au moins l'un de ces spécimens peut se faire de sorte à ce que cette sélection corresponde à au moins une donnée de personnalité de l'utilisateur calculée.

## Revendications

1. Procédé de détermination d'un agent (AC) conversationnel d'une interface (IHM) homme-machine sur un terminal (T), ledit agent conversationnel étant configuré pour interagir avec un utilisateur (U) dudit terminal via l'interface homme-machine, ledit procédé comprenant les étapes suivantes:
a) sur requête (RQ) d'une interaction de l'utilisateur avec l'agent conversationnel reçue par un serveur (S), calcul (300), par le serveur, d'au moins une donnée (Z1, Z2, ..., Zm) de personnalité de l'utilisateur;
b) sélection (400), par le serveur, d'au moins un spécimen (AC11, AC21, ..., ACm1, ACm2, ..., ACmn) d'agent conversationnel correspondant à ladite au moins une donnée de personnalité de l'utilisateur ; et
c) envoi (500), par le serveur vers le terminal, d'un message de réponse à ladite requête, ledit message comprenant ledit au moins un spécimen d'agent conversationnel.

2. Procédé selon la revendication 1, comprenant en outre une étape (200) préalable de lecture par ledit serveur d'au moins un message (M1, M2, ..., Mm) échangé par l'utilisateur sur une boîte (B1, B2, ..., Bm) de messages, l'étape de calcul du procédé étant en outre mise en œuvre au moyen d'une analyse sémantique appliquée audit au moins un message, ladite analyse sémantique utilisant un algorithme linguistique appliqué aux textes contenus dans ledit message.

3. Procédé selon la revendication 2, lequel l'étape de lecture comprend une sous-étape d'acquisition, par un capteur (C), d'au moins un paramètre de l'utilisateur, ledit paramètre étant choisi parmi une donnée (LOG) d'identification et/ou une donnée (PWD) de sécurité.

4. Procédé selon l'une quelconque des revendications précédentes, dans lequel le message de réponse comprend une combinaison dudit au moins un spécimen d'agent conversationnel, ladite combinaison étant pondérée à hauteur de l'au moins une donnée calculée de personnalité de l'utilisateur.

5. Procédé selon l'une quelconque des revendications précédentes, dans lequel les étapes de calcul, de sélection et d'envoi sont mises en œuvre de manière itérative.

6. Procédé selon l'une quelconque des revendications précédentes, comprenant en outre une étape (100) préalable d'initialisation du terminal par l'utilisateur.

7. Procédé selon l'une quelconque des revendications précédentes, dans lequel ladite au moins une donnée de personnalité de l'utilisateur comprend au moins un paramètre numérique, par exemple un nombre entier supérieur ou égal à 0 et inférieur ou égal à 10 ou à 100, ledit paramètre étant sélectionné parmi un degré d'intérêt, un paramètre d'ouverture, un paramètre de conscienciosité, un paramètre d'extraversion, un paramètre d'agréabilité et un paramètre de neuroticisme.

8. Procédé selon la revendication précédente, dans lequel la donnée de personnalité de l'utilisateur comprend en outre une moyenne, un mode ou une médiane dudit au moins un paramètre numérique que comprend ladite donnée de personnalité de l'utilisateur.

9. Procédé selon l'une quelconque des revendications précédentes, dans lequel l'étape d'envoi comprend une sous-étape (510) de copie, par le serveur, du message de réponse, de l'au moins une donnée de personnalité de l'utilisateur et/ou d'au moins un spécimen d'agent conversationnel sur le terminal ou sur un autre serveur.

10. Procédé selon l'une quelconque des revendications précédentes, dans lequel la donnée de personnalité de l'utilisateur est déterminée manuellement par l'utilisateur.

11. Procédé selon l'une quelconque des revendications précédentes, dans lequel la requête est émise par le terminal.

12. Procédé selon l'une quelconque des revendications précédentes, dans lequel l'étape d'envoi comprend une sous-étape (520) d'installation dudit au moins un spécimen d'agent conversationnel sur le terminal ou sur le serveur.

13. Programme d'ordinateur comportant des instructions pour l'exécution d'un procédé selon l'une quelconque des revendications précédentes lorsque ledit programme est exécuté par un processeur.

14. Moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 1 à 12.

15. Serveur de détermination d'un agent (AC) conversationnel, **caractérisé en ce qu'**il comprend un circuit (1000) de traitement pour la mise en œuvre du procédé selon l'une quelconque des revendications 1 à 12.
